# EUROPÄISCHE PATENTSCHRIFT

(11) **EP 0 897 081 B1**
(45) Veröffentlichungstag und Bekanntmachung des Hinweises auf die Patenterteilung: **23.10.2002**
(21) Anmeldenummer: 98114049.4
(22) Anmeldetag: 28.07.1998
(51) Int. Cl.: F16L 47/00, F16L 33/207, F16L 33/00

(54) **Anschlussvorrichtung für ein Kunststoffrohr**
Connecting device for a plastic pipe
Dispositif de raccordement pour un tuyau en plastique

(30) Priorität: 14.08.1997 DE 19735261
(43) Veröffentlichungstag der Anmeldung: 17.02.1999
(73) Patentinhaber: Uponor Innovation AB, 513 81 Fristad (SE)
(72) Erfinder: Riesselmann, Franz-Josef, Dipl.-Ing., 49393 Lohne (DE)
(74) Vertreter: Hilleringmann, Jochen, Dipl.-Ing.

(56) Entgegenhaltungen:
- WO-A-91/09246
- FR-A- 2 173 946
- US-A- 3 565 116
- US-A- 4 896 904

## Beschreibung

Die Erfindung betrifft eine Anschlußvorrichtung für ein Kunststoffrohr.

Anschlußvorrichtungen für ein Kunststoffrohr weisen im allgemeinen einen Fitting auf, an dem neben einem Fittingkörper auch ein von diesem abstehender Stützkörper in Hülsenform ausgebildet ist. Der Fittingkörper trägt einen Kupplungsabschnitt mit zumeist einem Außengewinde zum Festschrauben an einem korrespondierenden Innengewinde eines Rohrendes oder einer Wandhalterung. Sofern die Anschlußvorrichtung als Verbinder ausgebildet ist, weist der Fittingkörper zwei von diesem abstehende Stützkörper auf. Auf den Stützkörper wird das Anschlußende des anzuschließenden Kunststoffrohres aufgeschoben und anschließend mit einer Außenhülse fest auf den Stützkörper aufgepreßt. Im allgemeinen bestehen die Fittinge und die Hülsen aus Metall, wobei zum Aufpressen des Kunststoffrohres auf den Stützkörper die Metallhülse bleibend verformt wird. Im Stand der Technik sind aber auch Kunststoff-Anschlußvorrichtungen bekannt, bei denen der Fitting aus Kunststoff besteht und die Hülse ebenfalls aus Kunststoff gefertigt ist. Hierbei werden die Hülse und das Anschlußende des anzuschließenden Kunststoffrohres aufgeweitet, um im aufgeweiteten Zustand auf den Stützkörper geschoben zu werden. Da gestreckter Kunststoff bestrebt ist, selbsttätig seinen (spannungsfreien) Zustand einzunehmen, schrumpfen das Anschlußende des Kunststoffrohres und die dieses umgebende Kunststoff-Hülse, wodurch das Kunststoffrohr fest auf den Stützkörper aufgepreßt wird. Dieser Schrumpfvorgang kann durch lokale Erwärmung des Kunststoffrohr-Anschlußendes und der Kunststoff-Hülse beschleunigt werden. Ein Problem derartiger Anschlußvorrichtungen besteht jedoch darin, daß sich die Kunststoff-Hülse ungewollt verschiebt, so daß sie das Anschlußende des Kunststoffrohres nicht vorschriftsmäßig überdeckt.

Derartige Anschlussvorrichtungen sind im Stand der Technik bereits bekannt, wie beispielsweise aus der FR-A-2.173.946 oder der US-A-3,565,116. Bei diesen Anschlussvorrichtungen erstreckt sich die Kunststoffhülse um den Bund herum bis in eine dahinter liegende Aussparung. Aus WO94/18486 A1 ist ein Fitting mit einem Fittingkörper und einem Stützkörper bekannt. Am Fittingkörper befindet sich ein Bund, von dem der Stützkörper absteht. Der Bund dient als Anschlag für sowohl das anzuschließende Rohr als auch eine Schrumpfhülse, die beide auf den Stützkörper aufschiebbar sind. Vom Bund beabstandet ist auf dem Stützkörper eine Außenumfangsrippe angeordnet.

Der Erfindung liegt die Aufgabe zugrunde, eine Anschlußvorrichtung für ein Kunststoffrohr zu schaffen, bei der die aus Kunststoff bestehende Preßhülse im aufgeschrumpften Zustand sich ungewollt nicht mehr relativ zum Fitting verschieben kann.

Zur Lösung dieser Aufgabe wird mit der Erfindung eine Anschlußvorrichtung für ein Kunststoffrohr gemäß Anspruch 1 vorgeschlagen; vorteilhafte Weiterbildungen der Erfindung sind jeweils in den Unteransprüchen angegeben.

Die erfindungsgemäße Anschlußvorrichtung weist einen insbesondere aus Kunststoff bestehenden Fitting auf, der neben einem Fittingkörper auch mit einem von diesem abstehenden Stützkörper versehen ist. Auf den Stützkörper wird ein Anschlußende eines Kunststoffrohres aufgeschoben, wobei das Anschlußende im aufgeschobenen Zustand sich im Durchmesser verringern läßt. Insbesondere wird dies dadurch erreicht, daß das Anschlußende vor dem Aufschieben auf den Stützkörper aufgeweitet worden ist. Über das aufgeweitete Anschlußende wird eine Kunststoff-Schrumpfhülse aufgeschoben, die das Anschlußende und den an den Stützkörper angrenzenden Übergangsabschnitt des Fittingkörpers überdeckt. In diesem Übergangsabschnitt des Fittingkörpers weist der Fitting mindestens eine radiale Einschnürung zur axialen Sicherung der Schrumpfhülse in auf den Fittingkörper aufgeschrumpften Zustand und einen umlaufenden radialen Vorsprung auf.

Wenn die Kunststoff-Schrumpfhülse über das Kunststoffrohr-Anschlußende und bis in den Übergangsabschnitt des Fittingkörpers geschoben ist und anschließend sich im Durchmesser verringert, so schmiegt sie sich eng an den Fittingkörper im Bereich des Übergangsabschnitts an. Dadurch ist automatisch eine axiale Sicherung der Schrumpfhülse gegeben. In ihrem das Anschlußende des Kunststoffrohres umschließenden Abschnitt preßt die Schrumpfhülse das Kunststoffrohr gegen den Stützkörper. Dieser Stützkörper ist zweckmäßigerweise mit radialen Erhebungen bzw. Vertiefungen versehen, an die sich das ebenfalls schrumpfende Kunststoffrohr anschmiegt, so daß auch das Kunststoffrohr gegen axiale Zugbeanspruchungen am Fitting gesichert angeschlossen ist.

Wie beim Kunststoffrohr, so gilt auch für die Kunststoff-Schrumpfhülse, daß diese vor dem Aufschieben auf das Kunststoffrohr bzw. den Fittingkörper radial aufgeweitet ist. Durch lokale Erwärmung der Kunststoff-Schrumpfhülse und des Kunststoffrohr-Anschlußendes läßt sich der Schrumpfvorgang beschleunigen.

Der erfindungsgemäße Fitting ist also mit einem Übergangsabschnitt versehen, in dem sich ausschließlich die Schrumpfhülse befindet. Ein solcher Übergangsabschnitt hat für die Verbindung zwischen Kunststoffrohr und Fitting entscheidende Vorteile. So wird durch die direkte und unmittelbare Anlage der Schrumpfhülse am Fittingkörper in dessen Übergangsabschnitt eine zusätzliche Sicherheit gegen Undichtigkeiten geschaffen. Je nach Ausgestaltung dieses Übergangsabschnitts (beispielsweise mit einer Profilierung oder mehreren Einschnürungen) kann eine erhöhte Sicherung der Schrumpfhülse gegen axiale Verschiebungen realisiert werden. Diese zusätzliche axiale Sicherung ist auch durch die Verklebung der Schrumpfhülse mit dem Fittingkörper im Übergangsabschnitt erreicht werden. Bei dem erfindungsgemäßen Fittingkörper wird also die Schrumpfhülse über das Kunststoffrohr überstehend auf den Fitting aufgeschrumpft, um in ihrem Überstandsbereich am Fittingkörper verankert zu sein.

Zum fluiddichten Anschließen des Kunststoffrohres an der erfindungsgemäßen Anschlußvorrichtung ist es grundsätzlich zweckmäßig, am Stützkörper Dichtungsringe, insbesondere O-Ringe vorzusehen. Auf derartige Dichtungen kann jedoch verzichtet werden, da die Schrumpfhülse auf ihrer Innenseite, und/oder das Anschlußende des Kunststoffrohres auf seiner Außenseite und/oder der Fittingkörper zumindest im Übergangsabschnitt auf seiner Außenseite eine Haftvermittlerschicht aufweisen.

Nachfolgend wird anhand der Figuren ein Ausführungsbeispiel der Erfindung näher erläutert. Im einzelnen zeigen:
- Fig. 1: die Anschlußvorrichtung mit aufgeweitetem Kunststoffrohr-Anschlußende und aufgeweiteter Kunststoff-Schrumpfhülse, die beide in ihrem Zustand vor dem Aufschieben auf den Stützkörper des Fittings gezeigt sind,
- Fig. 2: die Anschlußvorrichtung gemäß Fig. 1 bei aufgeschobenem Kunststoffrohr-Anschlußende und noch nicht aufgeschobener Kunststoff-Schrumpfhülse und
- Fig. 3: die Anschlußvorrichtung gemäß Fig. 1 im angeschlossenen Zustand des Kunststoffrohres, wobei das Anschlußende des Kunststoffrohres und die Kunststoff-Schrumpfhülse auf den Fitting aufgeschrumpft sind.

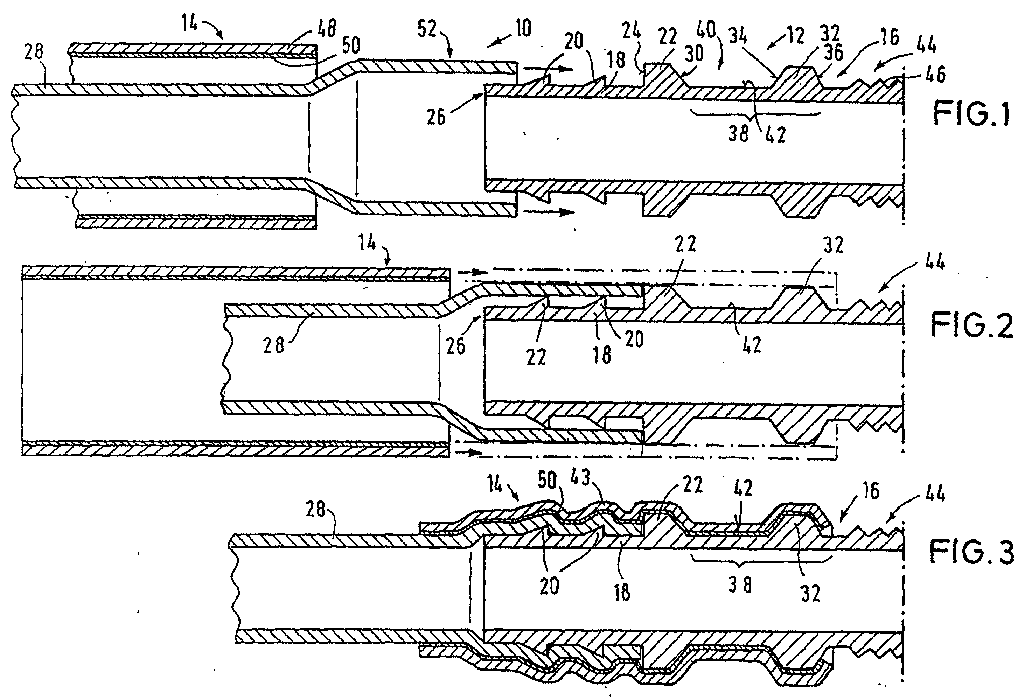

In Fig. 1 ist eine Anschlußvorrichtung 10 im Längsschnitt gezeigt, die einen Kunststoffitting 12 und eine Kunststoff-Schrumpfhülse 14 aufweist. Der Fitting 12 besteht aus vernetztem Polyethylen bzw. einem anderen geeigneten Werkstoff und weist einen rohrartigen Fittingkörper 16 mit einem von diesem axial abstehenden Stützkörper 18 auf. Der Stützkörper 18 ist mit einer Sägezahnprofilierung 20 versehen. Der Stützkörper 18 erstreckt sich bis zu einem Bund 22 des Fittings 12, der im Übergangsbereich zwischen Fittingkörper 16 und Stützkörper 18 angeordnet ist. Der Bund 22 ist mit einer sich radial erstreckenden Begrenzungsfläche 24 versehen, die dem freien Ende 26 des Stützkörpers 18 zugewandt ist. Diese Begrenzungsfläche 24 dient als Anschlagfläche für ein anzuschließendes Kunststoffrohr 28, das vorzugsweise aus vernetztem Polyethylen oder einem anderen schrumpffähigen Kunststoff besteht. Die andere den Bund 22 axial begrenzende Begrenzungsfläche 30 verläuft schräg, so daß sich insgesamt ein im Längsschnitt trapezförmiger Bund 22 ergibt.

Auf der dem Stützkörper 18 abgewandten Seite des Bundes 22 befindet sich ein weiterer Bund 32, der ebenfalls im Querschnitt trapezförmig ist und zwei schräg verlaufende Begrenzungsflächen 34,36 aufweist. Auf diese Weise entsteht im Übergangsbereich 38 des Fittingkörpers 16, an den sich zur einen Seite hin der Stützkörper 18 anschließt, eine im Querschnitt trapezförmige Einschnürung 40, die an ihren Flanken durch die einander gegenüberliegenden (Innen-)Begrenzungsflächen 30,34 der beiden Bunde 22,32 und im mittleren Abschnitt durch die Außenfläche 42 des Fittingkörpers 16 definiert ist. Auf der dem Stützkörper 18 abgewandten Seite des Bundes 32 befindet sich ein Kupplungsabschnitt 44 des Fittingkörpers 16, der ein Außengewinde 46 aufweist.

Wie bereits oben erwähnt, paßt auf die Anschlußvorrichtung 10 eine Kunststoff-Schrumpfhülse 14. Diese Schrumpfhülse 14 weist eine den Hauptteil ihrer Wandstärke ausmachende Außenschicht 48 aus vernetztem Polyethylen auf, die an ihrer Innenseite eine vergleichsweise dünne Innenbeschichtung 50 aus einem Haftvermittler trägt, der jeweilig dem Stützkörper- und Rohrmaterial angepaßt ist, um eine 100 %ige Dichtigkeit zu garantieren.

Um an der Anschlußvorrichtung 10 das Kunststoffrohr 28 anzuschließen, wird wie folgt verfahren.

Zunächst wird das Kunststoffrohr 28 an seinem Anschlußende 52 radial aufgeweitet, womit das Kunststoffmaterial des Rohres 28 gestreckt wird. Zudem wird auch die Schrumpfhülse 14 radial aufgeweitet, so daß sie über das radial aufgeweitete Anschlußende 52 des Kunststoffrohres 28 und die Bunde 22 und 32 des Fittings 12 geschoben werden kann. In einem nächsten Arbeitsgang wird dann die aufgeweitete Schrumpfhülse 14 auf das anzuschließende Kunststoffrohr 28 geschoben, das anschließend mit seinem Anschlußende 52 auf den Stützkörper 18 aufgeschoben wird, bis das Rohr 28 an der Begrenzungs- bzw. Anschlagfläche 24 des Bundes 22 anliegt. Diese Situation ist in Fig. 2 dargestellt. Wie in Fig. 2 durch gestrichelte Linien deutlich gemacht, wird anschließend die Schrumpfhülse 14 aufgeschoben, und zwar sowohl über das aufgeweitete Kunststoffrohr-Anschlußende 52 als auch den Fittingkörper 16 bis zum Kupplungsabschnitt 44. Die axiale Erstreckung der Schrumpfhülse 14 ist also mindestens gleich der Summe der axialen Erstreckungen des Stützkörpers 18 und des Fittingkörpers 16. Wie in den Figuren zu erkennen ist, ist die Schrumpfhülse 14 länger als die beiden zuvor genannten axialen Erstreckungen, da sie im aufgeschobenen Zustand über das freie Ende 26 des Stützkörpers 18 übersteht.

Wenn in dem in Fig. 2 strichpunktierten Aufschiebezustand der Schrumpfhülse 14 für ein Schrumpfen des aufgeweiteten Kunststoffrohr-Anschlußendes 52 und der Schrumpfhülse 14 gesorgt wird (was beispielsweise durch Erwärmung erfolgt) , so schmiegt sich die Schrumpfhülse 14 an die Außenkontur des Fittingkörpers 16 an, wobei sie sich in die Einschnürung 40 hineinlegt und um den dem Kupplungsabschnitt 44 zugewandten Bund 32 herumlegt. In ihrem das aufgeweitete Anschlußende 52 umgebenden Abschnitt legt sich die Schrumpfhülse 14 von außen dicht an das Kunststoffrohr 28 an, das seinerseits durch den Schrumpfvorgang sich an den Stützkörper 18 dicht anschmiegt. Der zwischen dem Anschlußende 52 des Kunststoffrohres 28 bzw. dem Fittingkörper 16 und der Außenschicht 48 der Schrumpfhülse 14 angeordnete Haftvermittler der Innenschicht 50 der Schrumpfhülse 14 sorgt für eine fluiddichte Verbindung zwischen der Schrumpfhülse 14 einerseits und dem Rohr 28 sowie dem Fitting 12 andererseits. Dadurch kann auf spezielle Dichtelemente O-Ringe oder dergleichen verzichtet werden.

Wie insbesondere anhand von Fig. 3 zu erkennen ist, kommt es in Folge des Aufschrumpfens der Schrumpfhülse 14 auf den Fittingkörper 16 zu einem festen Umschließen der Bunde 22 und 32, wodurch die Schrumpfhülse 14 sozusagen an dem Fittingkörper 16 festgeklammert ist und damit gegen axiale Verschiebungen gesichert ist. In genau der gleichen Weise kommt es zu einem festen Umschließen der Sägezahnprofilierung 20 des Stützkörpers 18 durch das Anschlußende 52 des Kunststoffrohres 28, so daß auch dieses gegen axiale Verschiebungen am Fitting 12 gesichert ist. Insgesamt ergibt sich damit eine sowohl hinsichtlich der Schrumpfhülse 14 als auch des Kunststoffrohres 28 gegen ungewollte axiale Verschiebungen gesicherte Verbindung zwischen dem Kunststoffrohr 28 und der Anschlußvorrichtung 10.

## Patentansprüche

1. Anschlussvorrichtung für ein Kunststoffrohr mit
- einem Fitting (12), der einen Fittingkörper (16) mit einem Bund (22) und einen von diesem abstehenden Stützkörper (18) aufweist, auf den das im Durchmesser verringerbare Anschlussende (52) eines anzuschließenden Kunststoffrohres (28) bis zur Anlage an dem Bund (22) aufschiebbar ist, und
- einer Kunststoff-Schrumpfhülse (14), die über das auf den Stützkörper (18) aufgeschobene Anschlussende (52) des Kunststoffrohres (28), den Bund (22) und einen an den Bund (22) angrenzenden, dem Stützkörper (18) abgewandten Übergangsabschnitt (38) des Fittingkörpers (16) aufschiebbar ist,
- wobei die Kunststoff-Schrumpfhülse (14) auf ihrer Innenseite und/oder das Anschlussende (52) des Kunststoffrohres (28) auf seiner Außenseite und/oder der Fittingkörper (16) zumindest im Übergangsabschnitt (38) auf seiner Außenseite eine Haftvermittlerschicht (50) aufweist, und
- wobei der Fittingkörper (16) innerhalb seines Übergangsabschnitts (38) mindestens eine radiale Einschnürung (40) aufweist,
**dadurch gekennezeichnet,**
- dass der Fittingkörper (16) innerhalb seines Übergangsabschnitts (38) weiterhin mindestens einen umlaufenden radialen Vorsprung (32) aufweist, wobei die Einschnürung (40) und der mindestens eine radiale Vorsprung (32) zur axialen Sicherung der Schrumpfhülse (14) im auf den Übergangsabschnitt (38) aufgeschrumpften Zustand dienen.

2. Anschlussvorrichtung nach Anspruch 1, **dadurch gekennzeichnet, dass** die Kunststoff-Schrumpfhülse (14) eine radial aufgeweitete Hülse ist.

3. Anschlussvorrichtung nach einem der Ansprüche 1 oder 2, **dadurch gekennzeichnet, dass** das Anschlussende (52) des Kunststoffrohres (28) aufgeweitet ist.

4. Anschlussvorrichtung nach einem der Ansprüche 1 bis 3, **dadurch gekennzeichnet, dass** die Einschnürung (40) auf der dem Stützkörper (18) abgewandten Seite des Bundes (22) an diesen angrenzend angeordnet ist.

5. Anschlussvorrichtung nach Anspruch 4, **dadurch gekennzeichnet, dass** der Fittingkörper (16) mehrere axial voneinander beabstandete Bunde (22,32) mit dazwischenliegenden Einschnürungen (40) aufweist.

6. Anschlussvorrichtung nach einem der Ansprüche 1 bis 5, **dadurch gekennzeichnet, dass** der Stützkörper (18) radiale Erhebungen (20) und/oder Vertiefungen zur axialen Sicherung des Anschlussendes (52) des Kunststoffrohres (28) aufweist.

7. Anschlussvorrichtung nach einem der Ansprüche 1 bis 6, **dadurch gekennzeichnet, dass** der Fitting (12) aus Kunststoff besteht.

## Claims

1. Connecting device for a plastic pipe comprising
- a fitting (12) with a fitting body (18) having a collar (22) and a supporting member (18) projecting therefrom, the fitting being adapted to have the connecting end (52) of a plastic pipe (28) to be connected thereto pushed thereon until it contacts the collar (22), said connecting end being reducible in diameter, and
- a plastic shrink-on sleeve (14) adapted to be pushed over the connecting end(52) of the plastic pipe (28) pushed on the supporting body (18), as well as over the collar (22) and a transition portion (38) of the fitting body (16) adjoining the collar (22) and averted from the supporting body (18),
- a layer (50) of a coupling agent being provided on the inner side of the plastic shrink-on sleeve (14) and/or on the outside of the connecting end (52) of the plastic pipe (28) and/or on the outside of the fitting body (16) at least in the transition portion (38), and
- the fitting body (16) having at least one radial constriction (40) within the transition portion (38),
**characterized in that**
- the fitting body (16) further has at least one circumferential radial projection (32) in its transition portion (38), the constriction (40) and the at least one radial projection (32) serve to axially secure the shrink-on sleeve (14) when shrunk on the transition portion (38).

2. Connecting device of claim 1, **characterized in that** the plastics shrink-on sleeve (14) is a radially expanded sleeve.

3. Connecting device of one of claims 1 or 2, **characterized in that** the connecting end (52) of the plastics pipe (28) is expanded.

4. Connecting device of one of claims 1 to 3, **characterized in that** the constriction (40) is arranged adjacent to the collar (22) on the side of the collar averted from the supporting body (18).

5. Connecting device of claim 4, **characterized in that** the fitting body (16) comprises a plurality of axially spaced collars (22, 32) with intermediate constrictions (40).

6. Connecting device of one of claims 1 to 5, **characterized in that** the supporting body (18) comprises radial protrusions (20) and/or depressions for axially securing the connecting end (52) of the plastics pipe (28).

7. Connecting device of one of claims 1 to 6, **characterized in that** the fitting (12) is made of plastic material.

## Revendications

1. Dispositif de raccordement pour un tuyau plastique avec
- un raccord (12) comprenant un corps de raccord (16) avec une collerette (22) et un corps de support (18) s'écartant de celle-ci, sur lequel peut être enfilée jusqu'au contact avec la collerette (22) l'extrémité de raccordement (52) pouvant être réduite dans son diamètre d'un tuyau plastique à raccorder (28) et
- une douille rétractable en plastique (14), qui peut être enfilée sur l'extrémité de raccordement (52) du tuyau plastique (28) emmanchée sur le corps de support (18), sur la collerette (22) et sur une section de transition (38) du corps de raccord (16) contiguë à la collerette (22) et opposée au corps de support (18),
- la douille rétractable en plastique (14) comprenant sur son côté intérieur et/ou l'extrémité de raccordement (52) du tuyau plastique (28) sur son côté extérieur et/ou le corps de raccord (16) au moins dans la section de transition (38) sur son côté extérieur une couche de produit d'accrochage et
- le corps de raccord (16) comprenant à l'intérieur de sa section de transition (38) au moins un rétrécissement radial (40),
**caractérisé en ce**
- **qu'**à l'intérieur de sa section de transition (38) le corps de raccord (16) comprend en outre au moins une avancée circulaire radiale (32), le rétrécissement (40) et l'au moins une avancée radiale (32) servant au blocage axial de la douille rétractable (14) dans son état de rétractation sur la section de transition (38).

2. Dispositif de raccordement selon la revendication 1, **caractérisé en ce que** la douille rétractable en plastique (14) est une douille évasée dans le sens radial.

3. Dispositif de raccordement selon l'une des revendications 1 ou 2, **caractérisé en ce que** l'extrémité de raccordement (52) du tuyau plastique (28) est évasée.

4. Dispositif de raccordement selon l'une des revendications 1 à 3, **caractérisé en ce que** sur le côté de la collerette (22), qui est opposé au corps de support (18), est disposé le rétrécissement (40) qui est contigu à celle-ci.

5. Dispositif de raccordement selon la revendication 4, **caractérisé en ce que** le corps de raccord (16) comprend plusieurs collerettes (22, 32) espacées l'une par rapport à l'autre dans le sens axial avec des rétrécissements (40) situés entre elles.

6. Dispositif de raccordement selon l'une des revendications 1 à 5, **caractérisé en ce que** le corps de support (18) comprend des élévations radiales (20) et/ou des évidements radiaux pour le blocage axial de l'extrémité de raccordement (52) du tuyau plastique (28).

7. Dispositif de raccordement selon l'une des revendications 1 à 6, **caractérisé en ce que** le raccord (12) est réalisé en matière plastique.
